# EUROPEAN PATENT SPECIFICATION

(11) **EP 3 270 681 B1**
(45) Date of publication and mention of the grant of the patent: **19.12.2018**
(21) Application number: 16713061.6
(22) Date of filing: 01.02.2016
(51) Int. Cl.: A01D 41/14

(54) **CUTTER HEAD OF SHREDDER/MOWER, CONDITIONER, WINDROWER, WITH OSCILLATING AUGER IN THREE OR MORE PORTIONS**
MÄHBALKEN FÜR MÄHWERK, KONDITIONIERER, SCHWADER MIT OSZILIERENDER SCHNECKE IN DREI ODER MEHR TEILEN
BARRE DE COUPE POUR FAUCHEUSE, CONDITIONEUSE, ANDAINEUSE AVEC VIS SANS FIN OSCILLANTE EN TROIS PORTION OU PLUS

(30) Priority: 17.03.2015 IT UB20150234
(43) Date of publication of application: 24.01.2018
(73) Proprietor: Marangon Srl, 35010 San Giorgio In Bosco (PD) (IT)
(72) Inventor: MARANGON, Giulio, 35010 S.Giorgio in Bosco (PD) (IT)
(74) Representative: Vinci, Marcello
(86) International application number: PCT/IB2016/050494
(87) International publication number: WO 2016/147059

(56) References cited:
- EP-A1- 2 095 703
- EP-A1- 2 446 729
- US-A- 3 683 601
- US-A1- 2004 123 575

## Description

The present invention concerns the sector of towed agricultural shredders and mowers, and in particular it concerns a new cutter head for shredders, mowers, conditioners, windrowers, with oscillating feed auger in three or more portions.

Shredders/mowers are known, which are self-propelled or towed and set in motion by agricultural tractors and are commonly used to shred plants of various sizes.

Shredders/mowers are known which comprise a cutter head constituted by a frame with a centre coupling, for example oscillating with a suspension device, a cutting unit, a feed auger and at least one cardan joint for connection to the power takeoff of the tractor.

The cutting unit in turn comprises a plurality of rotary cutters mounted on disks that are aligned on a bar usually arranged crosswise with respect to the advance direction of the machine, a gear train suited to make said cutters rotate simultaneously and means or members for connecting said gears to the power takeoff of the tractor.

Said connection means or members comprise at least one shaft mechanically connected to said cardan joint of the machine.

The cutter head comprises also at least one feed auger arranged crosswise with respect to the advance direction of the machine and generally arranged in a substantially backward and lifted position with respect to said cutting unit.

Said feed auger is mechanically connected to the power takeoff of the tractor through said cardan joint.

The material cut by the cutters is conveyed from the auger towards a collection point through which the material is then accumulated into a container or discharged or conveyed towards a shredding channel.

The material cut by the cutters thus accumulates inside the frame, generally in the lower portion of the frame, between the auger and the cutting unit.

Therefore, deposits of cut material, even of considerable size, accumulate in those areas, involving a considerable increase of the stress exerted on the auger, as well as an increase in consumption in the short term and undesired misalignments or even breakages of the auger in the long term.

US-A-20040123575 relates to a cutter head for shredders/mowers, conditioners, windrowers having all the features of the preamble of claim 1.

In order to avoid the drawbacks described above, the operator periodically needs to slow down the operation of the machine, in order to allow the material to be properly conveyed by the auger, in a sufficient quantity, and to avoid the formation of said deposits.

Said measures obviously lead to longer operating times and consequently reduced efficiency.

The circulation of agricultural machines on public roads is regulated by specific rules, which also establish limits to the sizes and weights of said machines. The agricultural machines that are necessarily bigger or heavier than prescribed are considered exceptional vehicles and therefore they can circulate on public roads only if specifically authorized for this purpose. There is also a further width limit, and the machines with width exceeding said limit can circulate on public roads only if accompanied by escort vehicles that precede them. Furthermore, when they are not in use, pulled or towed agricultural machines are stored in apposite depots that need to be very big in order to be able to accommodate them.

A drawback posed by the shredding or mowing machines of the known type lies in that the width of these machines creates problems related to the space they occupy in the depots and to their transport and circulation on public roads, due to the reasons explained above.

The applicant who is filing this application is the holder of the Italian patent no. 1414338, concerning a shredder/mower equipped with a cutter head that is foldable and divided in portions, wherein said cutter head is divided in a fixed or movable centre portion, with cardan joint for connection to the power takeoff, and at least one or preferably two lateral movable portions hinged to said centre portion and suited to rotate, with respect to said centre portion, from an open position, in which said portions are substantially aligned with one another so as to form the cutter head, to a folded position, in which said movable portions are superimposed and substantially parallel to said centre portion.

Each portion of said cutter head in turn comprises at least one frame, at least one segment of the cutting unit, at least one segment of the feed auger and means or members for connecting each one of said segments to the corresponding segments of the adjacent portion, for the timed, simultaneous and synchronized transmission of motion from one portion to the other.

The portions are hinged to one another through their respective frames and comprise members suited to move one or more portions with respect to the others. Conveniently, said members are hydraulic-pneumatic cylinders mounted on the frames of the portions and connected to the tractor circuit.

Said segment of the cutting unit of each portion comprises a motion transmission shaft suited to be also connected to the shaft of the adjacent portion. Analogously, each segment of the feed auger of each portion is in turn constrained to said frame of the respective portion and comprises connection members suited to connect it to said motion transmission shaft, and furthermore comprises connection members suited to connect it to the auger segment of the adjacent portion, transmitting also synchronized motion.

In the preferred solution, the auger segment or the cutting unit segment of each portion comprises, at the ends connected to the auger segment or the cutting unit segment of the adjacent portion, a joining member, or quick coupling, suited to provide the mechanical connection to a corresponding quick coupling located at the corresponding end of the auger segment or cutting unit segment of the adjacent portion.

In this way, when said portions are aligned in the open position so as to form the cutter head, all the segments of the cutting units and of the augers of all the portions are mechanically connected together, wherein said centre portion, connected to the power takeoff through the cardan joint, transmits motion to the other portions.

In particular, said auger segments are all aligned and connected to one another.

According to the invention, a lateral auger segment is set rotating axially by at least one belt or chain or another transmission means, and transmits the rotary motion to the other segments through said quick coupling.

In this way, all of the portions of the cutter head work simultaneously and in a synchronized manner, like a cutter head made up of a single portion.

The head works even if one of said portions is rotated by 180° in the folded position.

The subject of the present patent is a new type of cutter head for shredders, mowers, conditioners, windrowers, with oscillating feed auger in three or more portions.

The main object of the present invention is to provide a cutter head that allows the position of each auger segment to be varied with respect to the corresponding frame, in such a way as to vary the space included between the auger itself and the lower part of the frame and the corresponding segment of the cutting unit.

This characteristic of the new cutter head thus allows each auger segment to oscillate according to the quantity of material that accumulates inside the frame, between the cutting unit and the auger, during the cutting operation.

In this way, possible accumulations of material do not produce excessive stress on the auger which lifts up, at least at the level of the points with more accumulated material, and thus makes it easier to move and discharge the material.

It is another object of the present invention to provide a cutter head in which said auger segments are all kept connected and coaxial with one another during operation.

The motion of each auger segment is guided by a single auger and therefore there is no need to use special and complex transmission systems to transmit motion to the augers.

In fact, in the case of auger segments that are independent of each other, each segment should be individually connected to the power takeoff, thus making the machine much more complex and heavier.

These and other direct and complementary objects are achieved by the new type of cutter head for shredders, mowers, conditioners, windrowers, with oscillating feed auger in three or more portions.

The new cutter head is of the foldable type and divided in portions, and comprises:
- at least one fixed or movable, preferably central portion with a cardan joint for connection to the power takeoff,
- at least two lateral movable portions, hinged to said fixed or movable centre portion and suited to rotate, with respect to said centre portion, from an open position, in which said portions are substantially aligned with one another so as to form the cutter head, to a folded position, in which said lateral movable portions are superimposed and substantially parallel to said centre portion.

Said portions of the head are hinged to one another by means of the respective frames and comprise members suited to move one or more portions with respect to the others. Conveniently, said members are hydraulic-pneumatic cylinders mounted on the frames of the portions and connected to the circuit of the tractor.

Each portion of said cutter head in turn comprises:
- at least one frame,
- at least one segment of cutting unit,
- at least one segment of feed auger,
- means or members suited to connect each one of said segments to the corresponding segments of the adjacent portion, for the timed, simultaneous and synchronized transmission of motion between the auger segment of a portion and the other segments, when said head is in said open position,
and wherein each one of said auger segments in turn is constrained to the corresponding frame so that it oscillates with respect to the frame itself, in order to vary the shape and size of the space included between the auger itself, the lower part of the frame and the related segment of the cutting unit, according to the volume of cut material that accumulates in said space.

For example, the auger segment of a lateral portion, set rotating axially through one or more transmission means, in turn transmits motion to said centre portion and consequently also to the third lateral portion through said connection means.

In the preferred solution, each one of said auger segments comprises, at both ends, at least one arm that in turn is hinged to the frame, preferably to the rear or upper part of the frame, and oscillates, preferably in an idle manner, around the corresponding hinge with respect to the frame, thus making the corresponding end of the auger segment oscillate.

In this way, the auger segment can be variously inclined with respect to the frame.

Said segment of the cutting unit of each portion comprises a motion traansmission shaft suited to be also connected to the shaft of the adjacent portion. Analogously, each auger segment comprises members for connection to said motion transmission shaft and furthermore comprises at least one joining member, called quick coupling hereinafter, suited to allow it to be joined to the auger segment of the adjacent portion, suited to carry out the mechanical connection with a corresponding quick coupling located at the corresponding end of the auger segment or cutting unit segment of the adjacent portion.

In the open position, said portions are aligned and said auger segments are all mechanically connected together, so that they are coaxial with one another, thus forming the feed auger.

In this way, a variation in the position of an auger segment due to an accumulation of material causes the remaining segments to move integrally with it, so that said auger segments remain coaxial with one another, thus causing the entire feed auger to be inclined or shifted in general.
Figure 1 shows a three-dimensional view of a cutter head (A) for shredding/mowing machines in the completely open position, wherein said cutter head (A) comprises a centre portion (A1) and two lateral movable portions (A2, A3), respectively right and left when seen from the front.
Figure 2 shows a three-dimensional view of a cutter head (A) for shredding/mowing machines in the folded position.
Figures 3, 3a, 3b, 3c respectively show a front view, a sectional view and two side views of the central segment of the auger (C1) with oscillating arms, or centre oscillating arms (C4) suited to be hinged to the frame (F1).
Figures 4, 4a, 4b, 4c respectively show a front view, a sectional view and two side views of the right lateral segment of the auger (C2) with an internal oscillating arm (C5) and an external oscillating arm (C6) suited to be hinged to the frame (F2).
Figures 4d and 4e schematically show the movement of one end (C22) of said right lateral segment of the auger (C2) hinged to the corresponding frame (F2).
Figures 5, 5a, 5b, 5c respectively show a front view, a sectional view and two side views of the left lateral segment of the auger (C3) with an internal oscillating arm (C5) and an external oscillating arm (C6) suited to be hinged to the frame (F2).
Figure 6 shows a three-dimensional view of a quick coupling (D) for the mechanical connection between an auger segment (C1, C2, C3) of a portion (A1, A2, A3) and the auger segment (C1, C2, C3) of the adjacent portion (A1, A2, A3).

The invention refers to a shredder/mower (A) of the foldable type and divided into portions, with at least one cardan joint (E) for connection to the power takeoff of the tractor, not illustrated in the figure.

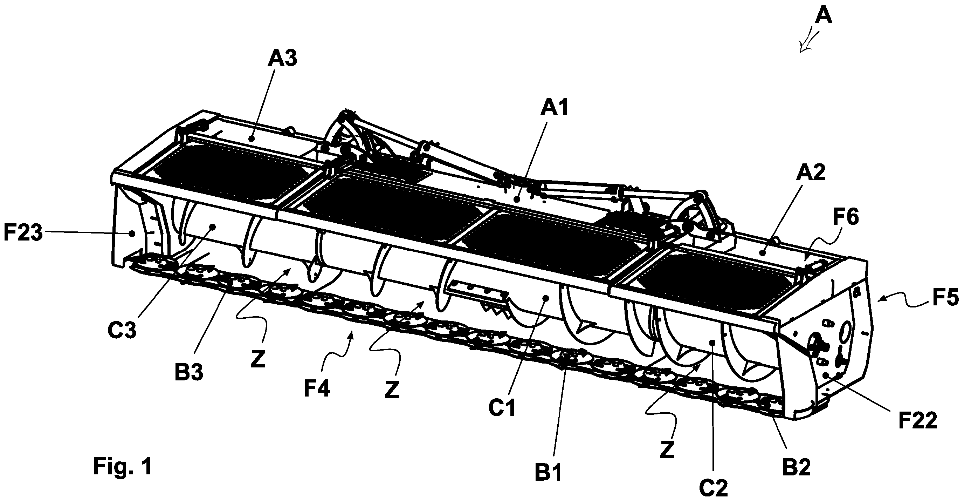

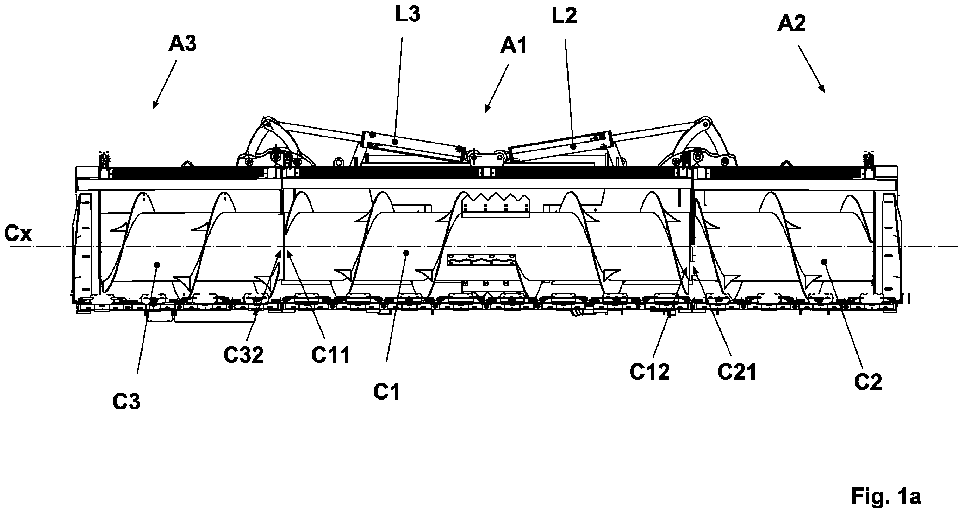

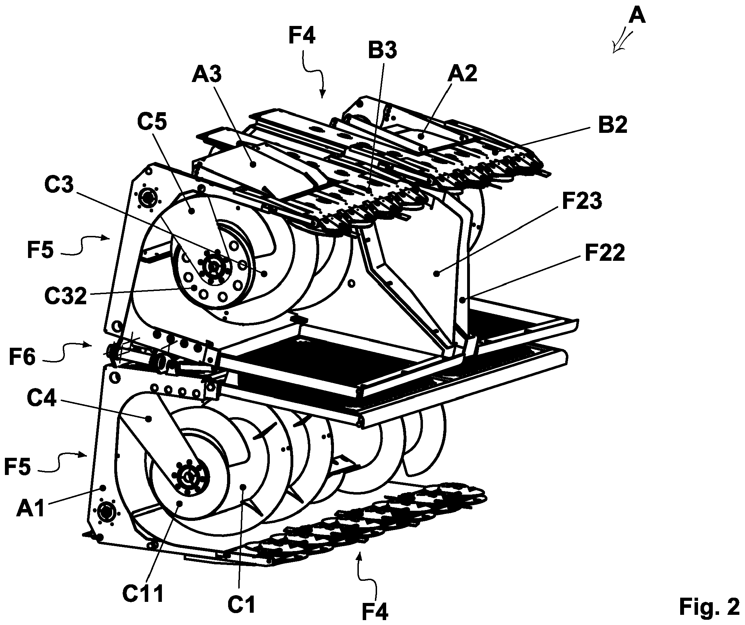

Said head (A) comprises a fixed or movable centre portion (A1) comprising said cardan joint (E), and one pair of lateral movable portions, a right one (A2) and a left one (A3), suited to rotate with respect to said centre portion (A1) from an open position (Figure 1), in which said portions (A1, A2, A3) are substantially aligned so as to form the cutter head (A), to a folded position (Figure 2), in which said movable portions (A2, A3) are rotated by substantially 180° around a corresponding axis (Y2, Y3) that is substantially horizontal and parallel to the advance direction of the machine, said movable portions (A2, A3) thus being superimposed and substantially parallel to said centre portion (A1).

Each portion (A1, A2, A3) of said cutter head (A) in turn comprises at least one frame (F1, F2, F3), at least one cutting unit segment (B1, B2, B3), at least one feed auger segment (C1, C2, C3) and members (D) for connecting each one of said segments (B1, B2, B3, C1, C2, C3) to the corresponding segments (B1, B2, B3, C1, C2, C3) of the adjacent portion, for the timed, simultaneous and synchronized transmission of motion from one portion to the other when said head (A) is in the open position.

When one or more lateral movable portions (A2, A3), instead, are in the rotated folded position, the mechanical connection with the centre portion (A1) is interrupted and therefore also the transmission of motion is interrupted.

Said frames (F2, F3) of said movable lateral portions (A2, A3) are both hinged (F21, F31) in specular positions to the frame (F1) of said centre portion (A1), in particular at the level of their upper part, in proximity to the respective facing edges (F12, F22, F13, F33).

The rotation of said movable portions (A2, A3) is controlled by means of moving members (L2, L3) comprising hydraulic-pneumatic cylinders mounted and hinged between said frame (F1) of the centre portion (A1) and said frames (F2, F3) of the movable lateral portions (A2, A3).

Each segment of the feed auger (C1, C2, C3) is in turn constrained, as described and claimed below, to said frame (F1, F2, F3) of the corresponding portion (A1, A2, A3), is arranged horizontally and crosswise with respect to the advance direction of the machine and comprises belts or chains or members for connection to said transmission shaft of the respective portion (A1, A2, A3).

Each auger segment (C1, C2, C3) is constrained at both ends (C11, C12, C21, C22, C31, C32) to the corresponding frame (F1, F2) through at least one arm (C4, C5, C6) that in turn is hinged to the frame (F1, F2, F3) and thus oscillates with respect to the frame itself.

Each one of said auger segments (C1, C2, C3) can oscillate with respect to the frame (F1, F2, F3), preferably in an idle manner, by means of said oscillating arms (C4, C5, C6), in order to vary the shape and size of the space (Z) included between said auger segments (C1, C2, C3), the lower part (F4) of the frame and said segments of the cutting unit (B1, B2, B3), according to the volume of cut material that accumulates in said space (Z).

In particular, each one of said auger segments (C1, C2, C3) comprises, at both ends (C11, C12, C21, C22, C31, C32), at least one arm (B4, B5, B6) that in turn is hinged (B42, B62, B62) to the rear part (F5) and/or the upper part (F6) of the frame (F1, F2, F3) and oscillates around said hinge (B42, B52, B62) with respect to the frame itself.

In this way, the oscillation of said arm (B4, B5, B6) causes the oscillation of the respective end (C11, C12, C21, C22, C31, C32) of the corresponding auger segment (C1, C2, C3) independently of the opposite end (C11, C12, C21, C22, C31, C32).

In this way, said auger segments (C1, C2, C3) can be inclined with respect to the respective frames (F1, F2, F3).

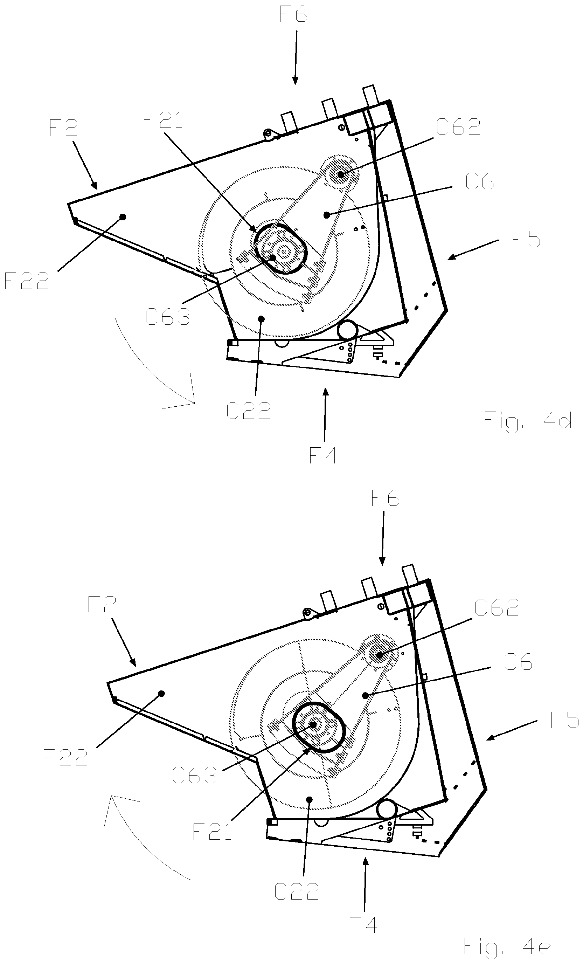

As schematically shown, for example, in Figures 4d and 4e, said frame (F1, F2, F3) of said auger segments (C1, C2, C3), in particular of said lateral auger segments (C2, C3), comprises side walls (F22, F23), each one of which is preferably provided with at least one hole or slotted seat (F21) that serves as a guide for the oscillation of part (C63) of said arm or of said end (C21, C22, C31, C32) of said oscillating auger segment (C1, C2, C3).

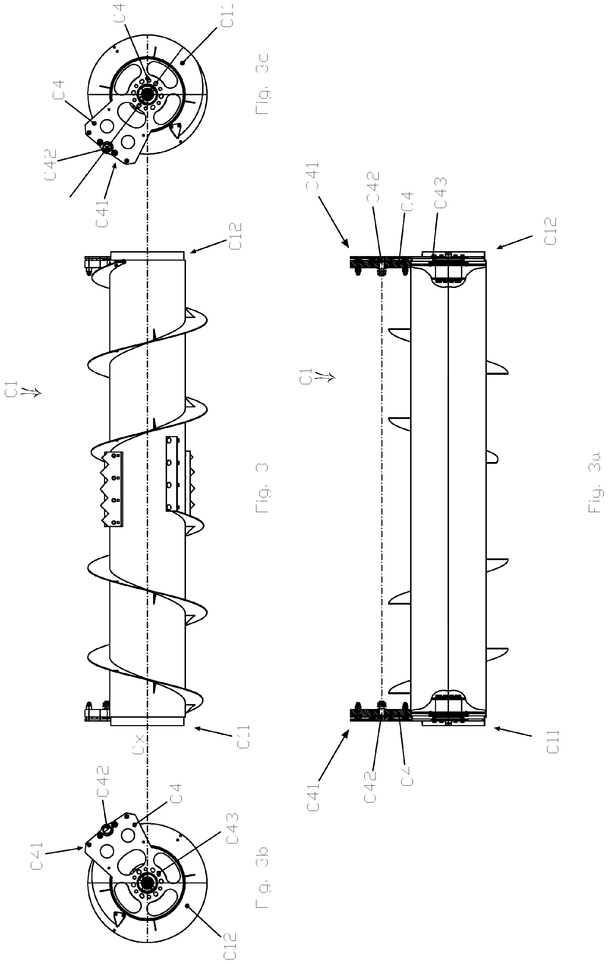

In greater detail, with particular reference to Figures 3, 3a, 3b, 3c, said auger segment (C1) of the centre portion (A1) comprises two opposite ends (C11, C12), each one of which has an arm, or centre arm (C4) constrained thereto.

Said centre arm (C4) is rigidly constrained to said end (C11, C12) of said segment of the centre auger (C1) through fixing means (C43) such as, for example, screws.

The free end (C41) of said centre arm (C4) is hinged (C42) in an oscillating manner to said rear part (F5) and/or upper part (F6) of the frame (F1).

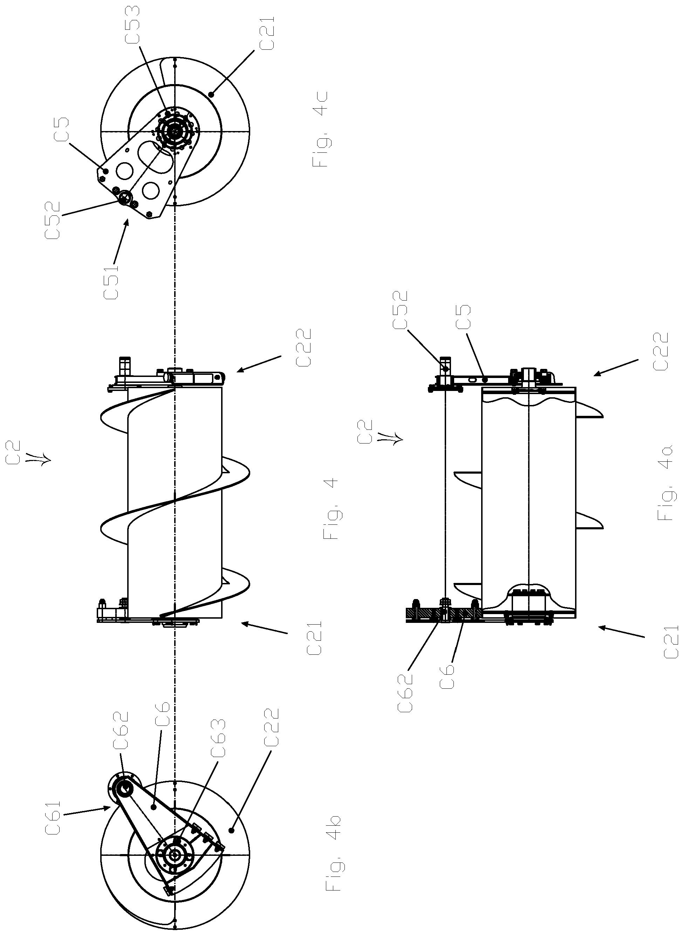

With reference to Figures 4, 4a, 4b, 4c, the right auger segment (C2) of the right lateral movable portion (A2) comprises two opposite ends, an inner end (C21), meaning an end that faces towards said centre auger segment (C1), and an outer end (C22), meaning an end that faces towards the outside.

An inner arm (C5) is rigidly constrained to said inner end (C21) of said right auger segment (C2) through fixing means (C53) such as, for example, screws.

The free end (C51) of said inner arm (C5), instead, is hinged (C52) to said rear part (F5) and/or upper part (F6) of the frame (F2).

An outer arm (C6) is rigidly constrained to said outer end (C22) of said right auger segment (C2), through fixing means (C63) such as, for example, screws.

The free end (C61) of said outer arm (C6), instead, is hinged (C62) in an oscillating manner to said rear part (F5) and/or upper part (F6) of the frame (F2).

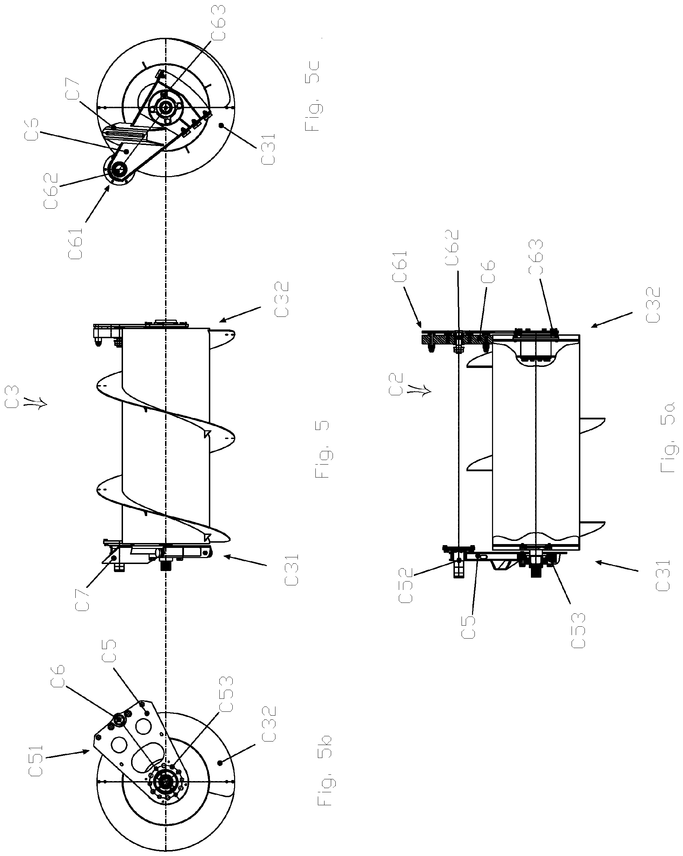

With reference to Figures 5, 5a, 5b, 5c, the left auger segment (C3) of the left lateral movable portion (A3) comprises two opposite ends, an inner end (C31), meaning an end that faces towards said centre auger segment (C1), and an outer end (C32), meaning an end that faces towards the outside.

An inner arm (C5) is rigidly constrained to said inner end (C31) of said left auger segment (C3) through fixing means (C53) such as, for example, screws.

The free end (C51) of said inner arm (C5), instead, is hinged (C52) in an oscillating manner to said rear part (F5) and/or upper part (F6) of the frame (F3).

According to the invention, said outer arm (C6) of said segment (C3) can be provided with transmission means for the axial rotation of said left auger segment (C3), for example with at least one chain or belt equipped with the respective tightener (C7). An outer arm (C6) is rigidly constrained to said outer end (C32) of said left auger segment (C3) through fixing means (C63) such as, for example, screws.

The free end (C61) of said outer arm (C6), instead, is hinged (C62) in an oscillating manner to said rear part (F5) and/or upper part (F6) of the frame (F3).

Each segment of the feed auger (C1, C2, C3) comprises also members (D) for connection to the auger segment (C1, C2, C3) of the adjacent portion (A1, A2, A3), wherein said connection member or quick coupling (D) is mounted on the connection ends (C11, C32, C12, C21) between adjacent auger segments (C1, C2, C3).

The axial rotation motion of said left auger segment (C3) is transmitted to said centre auger segment (C1) through said members (D) and then it is transmitted from said centre auger segment (C1) to said right auger segment (C2) through said connection member (D).

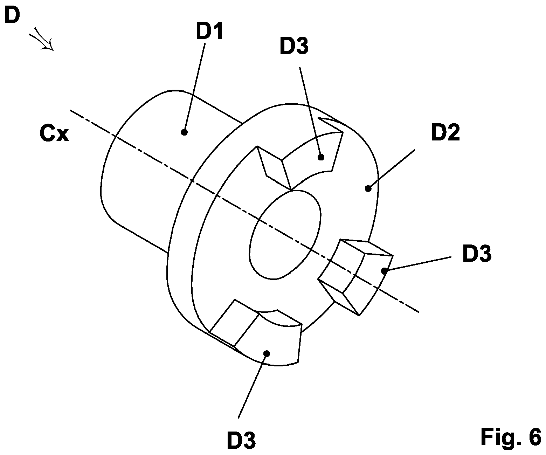

An example of embodiment of said quick coupling (D) is shown in Figure 6. Said quick coupling (D) comprises a portion (D1) that allows it to be fixed to the connection end (C11, C32, C12, C21) of the auger segment (C1, C2, C3), said fixing portion (D1) being, for example, substantially cylindrical and suited to be axially constrained to the auger segment (C1, C2, C3). A substantially plane circular portion (C2) is integral with said fixing portion (D1) of said quick coupling (D), said substantially plane circular portion (C2) being suited to lie substantially crosswise with respect to the axis (Cx) of the corresponding auger segment (C1, C2, C3), and wherein preferably two or more teeth (D3) are distributed on said plane circular portion (D2), said two or more teeth (D3) being suited to mesh with the teeth (D3) of the quick coupling (D) mounted on the end of the adjacent auger segment.

Thanks to said quick coupling (D), said auger segments (C1, C2, C3) remain coaxial, with said portions (A1, A2, A3) in said open position, and furthermore the axial rotation of the auger segment (C3) of a portion (A3) is transmitted to the auger segments (C1, C2) of the other portions (A1, A2).

Therefore, also the oscillation of each auger segment (C1, C2, C3) causes the overall oscillation of the adjacent segments (C1, C2, C3) and these remain all coaxial with one another. According to the invention, also the transmission shafts of the segments of the cutting unit comprise said quick couplings for mechanical connection to the shafts of the adjacent portions. Therefore, with reference to the above description and the attached drawings, the following claims are expressed.

## Claims

1. Cutter head (A) for shredders/mowers, conditioners, windrowers, said head (A) being of the foldable type and divided in portions, comprising a fixed or movable centre portion (A1) connected to the power takeoff through a cardan joint (E), and at least one pair of lateral movable portions (A2, A3) suited to rotate with respect to said centre portion (A1) from an open position, in which said portions (A1, A2, A3) are substantially aligned in such a way as to form the cutter head (A), to a folded position, in which said movable portions (A2, A3) are superimposed and substantially parallel to said centre portion (A1), each one of said portions (A1, A2, A3) in turn comprising:
• at least one frame (F1, F2, F3),
• at least one segment of the cutting unit (B1, B2, B3),
• at least one segment of the feed auger (C1, C2, C3),
• connection means or members (D) suited to connect each one of said segments of the auger (C1, C2, C3) to the corresponding segments (C1, C2, C3) of the adjacent portion (A1, A2, A3), for the timed, simultaneous and synchronized transmission of motion between the auger segment (C3) of one of said portions (A3) and the auger segments (C1, C2) of the other portions (A1, A2), when said head (A) is in said open position,
**characterized in that** each one of said auger segments (C1, C2, C3) in turn is constrained to the respective frame (F1, F2, F3) in an oscillating manner with respect to the frame itself (F1, F2, F3), in order to vary the shape and size of the space (Z) where the cut material accumulates, included between the auger segment (C1, C2, C3) itself, the lower part (F4) of the frame and the corresponding segment of the cutting unit (B1, B2, B3).

2. Cutter head (A) according to claim 1, **characterized in that** each one of said auger segments (C1, C2, C3) comprises, at both ends (C11, C12, C21, C22, C31, C32), at least one arm (C4, C5, C6) that in turn is hinged to the rear part (F5) and/or to the upper part (F6) of the frame (F1, F2, F3) and oscillates around the respective hinge (C42, C52, C62) with respect to said frame (F1, F2, F3), consequently causing the respective end (C11, C12, C21, C22, C31, C32) of the corresponding auger segment (C1, C2, C3) to oscillate.

3. Cutter head (A) according to claim 1 or 2, **characterized in that** the oscillation of said arm (B4, B5, B6) causes the oscillation of the respective end (C11, C12, C21, C22, C31, C32) of the corresponding auger segment (C1, C2, C3) independently of the opposite end (C11, C12, C21, C22, C31, C32).

4. Cutter head (A) according to the preceding claims, **characterized in that**, in said open position, said auger segments (C1, C2, C3) are mechanically connected to one another in such a way as to be coaxial with one another, forming the feed auger of the head (A), so that a change in the position of an auger segment (C1, C2, C3) due to the accumulation of material causes the corresponding and integral movement of the other auger segments (C1, C2, C3), so that said auger segments (C1, C2, C3) remain coaxial with one another, and thus cause the inclination or movement in general of the entire feed auger.

5. Cutter head (A) according to the preceding claims, **characterized in that** said auger segment (C1) of the centre portion (A1) comprises two opposite ends (C11, C12) each one of which has an arm, or centre arm (C4) constrained thereto, said centre arm (C4) being rigidly constrained to said end (C11, C12) of said centre auger segment (C1) through fixing means (C43) such as, for example, screws, while the free end (C41) of said centre arm (C4) is hinged (C42) in an oscillating manner to said rear part (F5) and/or upper part (F6) of the frame (F1).

6. Cutter head (A) according to the preceding claims, **characterized in that** said left auger segment (C3) of the left lateral movable portion (A3) comprises two opposite ends, an inner one (C31), meaning an inner end facing towards said centre auger segment (C1), and an outer one (C32), meaning an outer end facing towards the outside, and wherein:
• an inner arm (C5) is rigidly constrained to said inner end (C31) of said left auger segment (C3) through fixing means (C53) like, for example, screws, and wherein the free end (C51) of said inner arm (C5), instead, is hinged (C52) in an oscillating manner to said rear part (F5) and/or upper part (F6) of the frame (F3);
• an outer arm (C6) is rigidly constrained to said outer end (C32) of said left auger segment (C3) through fixing means (C63) like, for example, screws, and wherein the free end (C61) of said outer arm (C6), instead, is hinged (C62) in an oscillating manner to said rear part (F5) and/or upper part (F6) of the frame (F3).

7. Cutter head (A) according to the preceding claims, **characterized in that** said right auger segment (C2) of the right lateral movable portion (A2) comprises two opposite ends, an inner one (C21), meaning an inner end facing towards said centre auger segment (C1), and an outer one (C22), meaning an outer end facing towards the outside, and wherein:
• an inner arm (5) is rigidly constrained to said inner end (C21) of said right auger segment (C2) through fixing means (C53) like, for example, screws, and wherein the free end (C51) of said inner arm (C5), instead, is hinged (C52) to said rear part (F5) and/or upper part (F6) of the frame (F2);
• an outer arm (C6) is rigidly constrained to said outer end (C22) of said right auger segment through fixing means (C63) like, for example, screws, and wherein the free end (C61) of said outer arm (C6), instead, is hinged (C62) in an oscillating manner to said rear part (F5) and/or upper part (F6) of the frame (F2).

8. Cutter head (A) according to the preceding claims, **characterized in that** said portions (A1, A2, A3) are hinged to one another through the respective frames (F1, F2, F3), and wherein the rotation of said portions (A1, A3) is controlled through moving members (L2, L3), said moving members (L2, L3) comprising hydraulic-pneumatic cylinders mounted on said frames (F1, F2, F3) of the portions (A1, A2, A3).

9. Cutter head (A) according to the preceding claims, **characterized in that** each one of said connection members or quick couplings (D) is mounted at one of the connection ends (C32, C11, C12, C21) between adjacent auger segments (C1, C2, C3).

10. Cutter head (A) according to the preceding claims, **characterized in that** said quick coupling (D) comprises:
• a part (D1) suitable for fixing it to the end (C32, C11, C12, C21) of the auger segment (C1, C2, C3),
• a substantially plane circular part (D2) integral with said fixing part and suited to be arranged substantially crosswise with respect to the axis (Cx) of the auger segment (C1, C2, C3),
• two or more teeth (D3) distributed on said plane circular part (D2) and suited to mesh with the teeth of the quick coupling (D) mounted on the end (C32, C11, C12, C21) of the adjacent auger (C1, C2, C3) for transmitting the axial rotation from one auger to the other, and wherein said quick coupling (D) is suited to maintain the synchronization of the respective segments (B1, B2, B3, C1, C2, C3),
and wherein when said portions (A1, A2, A3) are aligned in the open position said segments of the cutting units (B1, B2, B3) and of the augers (C1, C2, C3) of all the portions are mechanically connected to one another through said quick couplings (D).

## Patentansprüche

1. Schneidkopf (A) für Häcksler/Mäher, Mähwender, Schwader, wobei der besagte Kopf (A) vom faltbaren Typ und in Abschnitte unterteilt ist und ein feststehendes oder bewegliches Mittelteil (A1) umfasst, das über ein Kardangelenk (E) mit der Zapfwelle verbunden ist, und wenigstens ein Paar seitlicher, beweglicher Abschnitte (A2, A3) umfasst, die geeignet sind, sich bezüglich des besagten Mittelteils (A1) aus einer offenen Position, in welcher die besagten Abschnitte (A1, A2, A3) im Wesentlichen gefluchtet sind, so dass sie den Schneidkopf (A) bilden, in eine zusammengeklappte Position zu drehen, in der die besagten beweglichen Abschnitte (A2, A3) überlappt und im Wesentlichen parallel zu dem besagten Mittelteil (A1) positioniert sind, wobei jeder der besagten Abschnitte (A1, A2, A3) seinerseits Folgendes umfasst:
• wenigstens einen Rahmen (F1, F2, F3),
• wenigstens ein Segment der Schneideeinheit (B1, B2, B3),
• wenigstens ein Segment der Förderschnecke (C1, C2, C3),
• Verbindungsmittel oder -elemente (D), die geeignet sind, jedes der besagten Segmente der Schnecke (C1, C2, C3) mit den entsprechenden Segmenten (C1, C2, C3) des angrenzenden Abschnitts (A1, A2, A3) zu verbinden für die zeitgesteuerte, gleichzeitige und synchronisierte Bewegungsübertragung zwischen dem Schneckensegment (C3) eines der besagten Abschnitte (A3) und den Schneckensegmenten (C1, C2) der anderen Abschnitte (A1, A2), wenn der besagte Kopf (A) sich in der besagten offenen Position befindet,
**dadurch gekennzeichnet, dass** jedes der besagten Schneckensegmente (C1, C2, C3) seinerseits an dem jeweiligen Rahmen (F1, F2, F3) befestigt ist in einer bezüglich des Rahmens (F1, F2, F3) selbst schwingenden Weise, so dass Form und Größe des Raums (Z), in dem sich das geschnittene Material ansammelt, zwischen dem Schneckensegment (C1, C2, C3) selbst, dem unteren Teil (F4) des Rahmens und dem entsprechenden Segment der Schneideeinheit (B1, B2, B3) verändert wird.

2. Schneidkopf (A) nach Patentanspruch 1, **dadurch gekennzeichnet, dass** jedes der besagten Schneckensegmente (C1, C2, C3) an beiden Enden (C11, C12, C21, C22, C31, C32) wenigstens einen Arm (C4, C5, C6) umfasst, der seinerseits am hinteren Teil (F5) und/oder am oberen Teil (F6) des Rahmens (F1, F2, F3) angelenkt ist und bezüglich des besagten Rahmens (F1, F2, F3) um das jeweilige Gelenk (C42, C52, C62) schwingt, was in der Folge die Schwingung des jeweiligen Endes (C11, C12, C21, C22, C31, C32) des entsprechenden Schneckensegments (C1, C2, C3) verursacht.

3. Schneidkopf (A) nach Patentanspruch 1 oder 2, **dadurch gekennzeichnet, dass** die Schwingung des besagten Arms (B4, B5, B6) die Schwingung des jeweiligen Endes (C11, C12, C21, C22, C31, C32) des entsprechenden Schneckensegments (C1, C2, C3) verursacht, unabhängig von dem entgegengesetzten Ende (C11, C12, C21, C22, C31, C32).

4. Schneidkopf (A) nach vorstehenden Patentansprüchen, **dadurch gekennzeichnet, dass** die besagten Schneckensegmente (C1, C2, C3) in der besagten offenen Position mechanisch miteinander verbunden sind, so dass sie koaxial zueinander sind und die Förderschnecke des Kopfes (A) bilden, so dass eine Änderung der Position eines Schneckensegments (C1, C2, C3) aufgrund der Ansammlung von Material die entsprechende und gemeinsame Bewegung der anderen Schneckensegmente (C1, C2, C3) als eine Einheit verursacht, so dass die besagten Schneckensegmente (C1, C2, C3) miteinander koaxial bleiben und dadurch die Neigung oder Bewegung im Allgemeinen der gesamten Förderschnecke verursachen.

5. Schneidkopf (A) nach vorstehenden Patentansprüchen, **dadurch gekennzeichnet, dass** das besagte Schneckensegment (C1) des Mittelteils (A1) zwei entgegengesetzte Enden (C11, C12) umfasst, von denen jedes einen an ihm befestigten Arm oder Mittelarm (C4) aufweist, wobei der besagte Mittelarm (C4) mit Befestigungsmitteln (C43) wie beispielsweise Schrauben starr an dem besagten Ende (C11, C12) des besagten mittleren Schneckensegments (C1) befestigt ist, während das freie Ende (C41) des besagten Mittelarms (C4) schwingend an dem besagten hinteren Teil (F5) und/oder an dem besagten oberen Teil (F6) des Rahmens (F1) angelenkt (C42) ist.

6. Schneidkopf (A) nach vorstehenden Patentansprüchen, **dadurch gekennzeichnet, dass** das besagte linke Schneckensegment (C3) des linken seitlichen, beweglichen Abschnitts (A3) zwei entgegengesetzte Enden umfasst, und zwar ein inneres Ende (C31), das heißt ein inneres Ende, das zu dem besagten mittleren Schneckensegment (C1) gerichtet ist, und ein äußeres Ende (C32), das heißt ein äußeres Ende, das nach außen gerichtet ist, und wobei:
• ein innerer Arm (C5) durch Befestigungsmittel (C53) wie beispielsweise Schrauben starr mit dem besagten inneren Ende (C31) des besagten linken Schneckensegments (C3) verbunden ist, und wobei das freie Ende (C51) des besagten inneren Arms (C5) hingegen schwingend an dem besagten hinteren Teil (F5) und/oder an dem besagten oberen Teil (F6) des Rahmens (F3) angelenkt (C52) ist;
• ein äußerer Arm (C6) durch Befestigungsmittel (C63) wie beispielsweise Schrauben starr mit dem besagten äußeren Ende (C32) des besagten linken Schneckensegments (C3) verbunden ist, und wobei das freie Ende (C61) des besagten äußeren Arms (C6) hingegen schwingend an dem besagten hinteren Teil (F5) und/oder an dem besagten oberen Teil (F6) des Rahmens (F3) angelenkt (C62) ist.

7. Schneidkopf (A) nach vorstehenden Patentansprüchen, **dadurch gekennzeichnet, dass** das besagte rechte Schneckensegment (C2) des besagten rechten seitlichen, beweglichen Abschnitts (A2) zwei entgegengesetzte Enden umfasst, und zwar ein inneres Ende (C21), das heißt ein inneres Ende, das zu dem besagen mittleren Schneckensegment (C1) gerichtet ist, und ein äußeres Ende (C22), das heißt ein äußeres Ende, das nach außen gerichtet ist, und wobei:
• ein innerer Arm (5) durch Befestigungsmittel (C53) wie beispielsweise Schrauben starr mit dem besagten inneren Ende (C21) des besagten rechten Schneckensegments (C2) verbunden ist, und wobei das freie Ende (C51) des besagten inneren Arms (C5) hingegen an dem besagten hinteren Teil (F5) und/oder dem besagten oberen Teil (F6) des Rahmens (F2) angelenkt (C52) ist;
• ein äußerer Arm (C6) durch Befestigungsmittel (C63) wie beispielsweise Schrauben starr mit dem besagten äußeren Ende (C22) des besagten rechten Schneckensegments verbunden ist, und wobei das freie Ende (C61) des besagten äußeren Arms (C6) hingegen schwingend an dem besagten hinteren Teil (F5) und/oder dem besagten oberen Teil (F6) des Rahmens (F2) angelenkt (C62) ist.

8. Schneidkopf (A) nach vorstehenden Patentansprüchen, **dadurch gekennzeichnet, dass** die besagten Abschnitte (A1, A2, A3) über die jeweiligen Rahmen (F1, F2, F3) aneinander angelenkt sind und wobei die Drehung der besagten Abschnitte (A1, A3) durch Bewegungselemente (L2, L3) gesteuert wird, wobei die besagten Bewegungselemente (L2, L3) hydraulisch-pneumatische Zylinder umfassen, die an den besagten Rahmen (F1, F2, F3) der Abschnitte (A1, A2, A3) montiert sind.

9. Schneidkopf (A) nach vorstehenden Patentansprüchen, **dadurch gekennzeichnet, dass** jedes der besagten Verbindungselemente oder Schnellkupplungen (D) zwischen aneinander angrenzenden Schneckensegmenten (C1, C2, C3) an einem der Verbindungsenden (C32, C11, C12, C21) montiert ist.

10. Schneidkopf (A) nach vorstehenden Patentansprüchen, **dadurch gekennzeichnet, dass** die besagte Schnellkupplung (D) Folgendes umfasst:
• ein Teil (D1), das geeignet ist, sie am Ende (C32, C11, C12, C21) des Schneckensegments (C1, C2, C3) zu befestigen,
• ein im Wesentlichen ebenes, kreisförmiges Teil (D2), das mit dem besagten Befestigungsteil eine Einheit bildet und geeignet ist, im Wesentlichen quer zu der Achse (Cx) des Schneckensegments (C1, C2, C3) angeordnet zu werden,
• zwei oder mehrere, auf dem besagten ebenen, kreisförmigen Teil (D2) verteilte Zähne (D3), die geeignet sind, in die Zähne der am Ende (C32, C11, C12, C21) der angrenzenden Schnecke (C1, C2, C3) montierten Schnellkupplung (D) einzugreifen, um die axiale Drehung von einer Schnecke an die andere zu übertragen, und wobei die besagte Schnellkupplung (D) dazu geeignet ist, die Synchronisierung der jeweiligen Segmente (B1, B2, B3, C1, C2, C3) zu erhalten,
und wobei, wenn die besagten Abschnitte (A1, A2, A3) in der offenen Position gefluchtet sind, die besagten Segmente der Schneideeinheiten (B1, B2, B3) und der Schnecken (C1, C2, C3) aller Abschnitte mittels der besagten Schnellkupplungen (D) mechanisch miteinander verbunden sind.

## Revendications

1. Tête de coupe (A) pour broyeurs/tondeuses, conditionneuses, andaineurs, ladite tête (A) étant du type repliable et divisée en sections, comprenant une section centrale (A1), fixe ou mobile, reliée à la prise de force à travers un joint de cardan (E), et au moins un couple de sections mobiles latérales (A2, A3), aptes à tourner par rapport à ladite section centrale (A1) d'une position d'ouverture, dans laquelle lesdites sections (A1, A2, A3) sont essentiellement alignées de manière à former la tête de coupe (A), à une position repliée, dans laquelle lesdites sections mobiles (A2, A3) sont ainsi superposées et sont essentiellement parallèles à ladite section centrale (A1), **caractérisée en ce que** chacune desdites sections (A1, A2, A3) comprend à son tour :
• au moins un bâti (F1, F2, F3),
• au moins un segment du groupe de coupe (B1, B2, B3),
• au moins un segment du convoyeur à vis (C1, C2, C3),
• des moyens ou organes de raccordement (D) aptes à relier chacun desdits segments de la vis (C1, C2, C3) aux segments correspondants (C1, C2, C3) de la section adjacente (A1, A2, A3), pour la transmission du mouvement temporisé, simultané et synchronisé, entre le segment de vis (C3) d'une desdites sections (A3) et les segments de vis (C1, C2) des autres sections (A1, A2), quand ladite tête (A) est dans ladite position d'ouverture,
**caractérisée en ce que** chacun desdits segments de vis (C1, C2, C3) est bloqué à son tour au bâti correspondant (F1, F2, F3) de manière oscillante par rapport au bâti même (F1, F2, F3), pour varier la forme et les dimensions de l'espace (Z) où le matériel coupé s'accumule, y compris entre le segment de vis (C1, C2, C3), la partie inférieure (F4) du bâti et le segment correspondant du groupe de coupe (B1, B2, B3).

2. Tête de coupe (A) selon la revendication 1, **caractérisée en ce que** chacun desdits segments de vis (C1, C2, C3) comprend, sur les deux extrémités (C11, C12, C21, C22, C31, C32), au moins un bras (C4, C5, C6) qui, à son tour, est articulé à charnière à la partie arrière (F5) et/ou à la partie supérieure (F6) du bâti (F1, F2, F3) et qui oscille autour de la charnière correspondante (C42, C52, C62) par rapport audit bâti (F1, F2, F3), en faisant osciller par conséquent l'extrémité correspondante (C11, C12, C21, C22, C31, C32) du segment de vis correspondant (C1, C2, C3).

3. Tête de coupe (A) selon la revendication 1 ou 2, **caractérisée en ce que** l'oscillation dudit bras (B4, B5, B6) provoque l'oscillation de l'extrémité relative (C11, C12, C21, C22, C31, C32) du segment de vis correspondant (C1, C2, C3) indépendamment de l'extrémité opposée (C11, C12, C21, C22, C31, C32).

4. Tête de coupe (A) selon les revendications précédentes, **caractérisée en ce que**, dans ladite position d'ouverture, lesdits segments de vis (C1, C2, C3) sont reliés mécaniquement entre eux de manière à être mutuellement coaxiaux, en formant le convoyeur à vis de la tête (A), de façon à ce que, une variation de position d'un segment de vis (C1, C2, C3) dû à une accumulation de matériel provoque le déplacement correspondant et solidaire des segments de vis restants (C1, C2, C3), de manière à ce que lesdits segments de vis (C1, C2, C3) restent coaxiaux entre eux, en provoquant ainsi l'inclinaison ou le déplacement en général du convoyeur à vis entier.

5. Tête de coupe (A) selon les revendications précédentes, **caractérisée en ce que** ledit segment de vis (C1) de la section centrale (A1) comprend deux extrémités opposées (C11, C12), chacune desquelles présente un bras, ou bras central (C4) bloqué sur celle-ci, ledit bras central (C4) étant bloqué de manière rigide à ladite extrémité (C11, C12) dudit segment de vis (C1) par des moyens de fixation (C43), comme par exemple des vis, alors que l'extrémité libre (C41) dudit bras central (C4) est articulée à charnière (C42) de manière oscillante à ladite partie arrière (F5) et/ou supérieure (F6) du bâti (F1).

6. Tête de coupe (A) selon les revendications précédentes, **caractérisée en ce que** ledit segment de vis gauche (C3) de la section mobile latérale gauche (A3) comprend deux extrémités opposées, une intérieure (C31), c'est-à-dire une extrémité intérieure tournée vers ledit segment de vis central (C1), et une extérieure (C32), c'est-à-dire une extrémité extérieure tournée vers l'extérieur, et où :
• un bras intérieur (C5) étant bloqué de manière rigide à une extrémité intérieure (C31) dudit segment de vis gauche (C3), par des moyens de fixation (C53), comme par exemple des vis, et où l'extrémité libre (C51) dudit bras intérieur (C5), par contre, est articulée à charnière (C52) de manière oscillante à ladite partie arrière (F5) et/ou supérieure (F6) du bâti (F3) ;
• un bras extérieur (C6) étant bloqué de manière rigide à ladite extrémité extérieure (C32) dudit segment de vis gauche (C3) par des moyens de fixation (C63), comme par exemple des vis, et où l'extrémité libre (C61) dudit bras extérieur (C6), par contre, est articulée à charnière (C62) de manière oscillante à ladite partie arrière (F5) et/ou supérieure (F6) du bâti (F3).

7. Tête de coupe (A) selon les revendications précédentes, **caractérisée en ce que** ledit segment de vis droit (C2) de la section mobile latérale droite (A2) comprend deux extrémités opposées, une intérieure (C21), c'est-à-dire une extrémité intérieure tournée vers ledit segment de vis central (C1), et une extérieure (C22), c'est-à-dire une extrémité extérieure tournée vers l'extérieur, et où :
• un bras intérieur (C5) étant bloqué de manière rigide à ladite extrémité intérieure (C21) dudit segment de vis droit (C2) par des moyens de fixation (C53), comme par exemple des vis, et où l'extrémité libre (C51) dudit bras intérieur (C5), par contre, est articulée à charnière (C52) à ladite partie arrière (F5) et/ou supérieure (F6) du bâti (F2) ;
• un bras extérieur (C6) étant bloqué de manière rigide à ladite extrémité extérieure (C22) dudit segment de vis droit (C2) par des moyens de fixation (C63), comme par exemple des vis, et où l'extrémité libre (C61) dudit bras extérieur (C6), par contre, est articulée à charnière (C62) de manière oscillante à ladite partie arrière (F5) et/ou supérieur (F6) du bâti (F2).

8. Tête de coupe (A) selon les revendications précédentes, **caractérisée en ce que** lesdites sections (A1, A2, A3) sont articulées entre elles à charnière au moyen des bâtis correspondants (F1, F2, F3), et où la rotation desdites sections (A1, A3) est commandée par des organes de manutention (L2, L3), lesdits organes de manutention (L2, L3) comprenant des cylindres hydrauliques-pneumatiques montés sur lesdits bâtis (F1, F2, F3) des sections (A1, A2, A3).

9. Tête de coupe selon les revendications précédentes, **caractérisée en ce que** chacun desdits organes de raccordement ou raccord rapide (D) est monté sur une desdites extrémités de raccordement (C32, C11, C12, C21) entre des segments de vis adjacents (C1, C2, C3).

10. Tête de coupe (A) selon les revendications précédentes, **caractérisée en ce que** ledit raccord rapide (D) comprend :
• une partie (D1) pour la fixation à l'extrémité (C32, C11, C12, C21) du segment de vis (C1, C2, C3),
• une partie circulaire essentiellement plane (D2) solidaire de ladite partie de fixation et apte à être essentiellement transversale par rapport à l'axe (Cx) du segment de vis (C1, C2, C3),
• deux ou plusieurs dents (D3) distribuées sur ladite partie circulaire plane (D2) et aptes à s'engrener aux dents du raccord rapide (D) monté sur l'extrémité (C32, C11, C12, C21) de la vis adjacente (C1, C2, C3) pour la transmission de la rotation axiale d'une vis à l'autre, et où le raccord rapide (D) est pate à maintenir la synchronisation des segments correspondants (B1, B2, B3, C1, C2, C3),
et où, quand lesdites sections (A1, A2, A3) sont alignées en position d'ouverture, lesdits segments des groupes de coupe (B1, B2, B3) et des vis (C1, C2, C3) de toutes les sections sont reliés mécaniquement entre eux par des raccords rapides (D).
